# EUROPÄISCHE PATENTSCHRIFT

(11) **EP 2 772 673 B1**
(45) Veröffentlichungstag und Bekanntmachung des Hinweises auf die Patenterteilung: **16.09.2015**
(21) Anmeldenummer: 14155129.1
(22) Anmeldetag: 14.02.2014
(51) Int. Cl.: F16L 5/10, F16L 5/02, H02G 3/22

(54) **Luftdichtmanschette**
Airtight sleeve
Manchette étanche à l'air

(30) Priorität: 01.03.2013 DE 202013100908 U
(43) Veröffentlichungstag der Anmeldung: 03.09.2014
(73) Patentinhaber: HYDROPHON Kunststofftechnik GmbH, 57399 Kirchhundem (DE)
(72) Erfinder: Hille, Thomas, 57399 Kirchhundem (DE)
(74) Vertreter: Beckmann, Jürgen

(56) Entgegenhaltungen:
- EP-A1- 2 397 737
- DE-A1- 10 230 622
- DE-U1- 9 404 575
- US-A- 6 161 589

## Beschreibung

Die Erfindung betrifft eine Luftdichtmanschette zum Abdichten des Wandaustrittes eines Kabels, Rohres oder dergleichen.

Luftdichtmanschetten werden benötigt, um den Durchtritt von Installationen durch eine ansonsten luft- und/oder wasserdichte Wand wieder abzudichten. Eine Ausführungsform einer solchen Manschette ist beispielsweise aus der DE 20 2010 007 692 U1 bekannt.

Die EP 2 397737 A1 zeigt eine scheibenförmige Luftdichtmanschette, bei welcher durch Ziehen (Verformen) eines elastischen Trägermaterials ein Randbereich zur Überlappung mit einem radialen Schlitz gebracht wird.

Aus der DE 10230622 A1 ist eine Tülle zum Durchführen von Leitungssträngen oder dergleichen bekannt. Die Tülle besteht aus einem elastischen Dichtungsband mit einem radialen Trennschlitz, welches von einem Verspannbügel zum Verspannen umgeben ist.

Des Weiteren zeigt die DE 94 04 575 U1 eine Dichtmanschette, bei welcher eine Überlappung einen radialen Montageschlitz abdeckt.

Aufgabe der vorliegenden Erfindung war es, eine einfach herstellbare und gut dichtende Luftdichtmanschette bereitzustellen.

Diese Aufgabe wird durch eine Luftdichtmanschette nach Anspruch 1, durch einen Wandaustritt nach Anspruch 9, und durch ein Verfahren nach Anspruch 10 gelöst. Vorteilhafte Ausgestaltungen sind in den Unteransprüchen enthalten.

Die Luftdichtmanschette gemäß einem ersten Aspekt der Erfindung dient zum Abdichten des Wandaustritts (mindestens) eines Kabels, Rohres oder dergleichen. Sie enthält die folgenden Komponenten:
- Ein ringförmiges Dichtelement mit einem im Wesentlichen radial verlaufenden Trennschlitz.
   Dass der Trennschlitz "im Wesentlichen radial" verlaufen soll bedeutet, dass er vom Mittelpunkt des Dichtelementes, wo typischerweise ein Öffnungsauge vorliegt, bis zum Rand des Dichtelementes verläuft, wobei dieser Verlauf jedoch keineswegs an jeder Stelle genau radial gerichtet sein muss.
   Der Begriff "ringförmig" ist im Übrigen weit zu verstehen und umfasst auch Ringe bzw. Scheiben mit einem Durchmesser des Öffnungsauges von Null. In der Regel werden sich die Ringenden des Dichtelementes am Trennschlitz berühren. Es ist jedoch auch möglich, dass der Trennschlitz eine von Null verschiedene Breite hat und das Dichtelement somit C-förmig aussieht.
- Mindestens eine Fixierklappe, welche beweglich am Dichtelement so angeordnet ist, dass sie im montierten Zustand der Luftdichtmanschette den Trennschlitz zumindest teilweise überdecken kann. Die Beweglichkeit der Fixierklappe wird in der Regel nur vor der Montage der Luftdichtmanschette gegeben sein, während die Fixierklappe nach der Montage typischerweise fest mit dem Dichtelement verbunden ist.

Die beschriebene Luftdichtmanschette hat den Vorteil, dass sie leicht angewendet und insbesondere auch nachträglich (d. h. nach Einziehen des Kabels, Rohres oder dergleichen) installiert werden kann, indem das Dichtelement am Trennschlitz geöffnet und um das Kabel (Rohr etc.) gelegt wird. Nach diesem ersten Schritt der Anbringung kann dann die Fixierklappe über den Trennschlitz gelegt werden, um auch in diesem Bereich Dichtheit herzustellen.

Wie ihr Name andeutet, wird die Luftdichtmanschette in der Regel dazu ausgelegt sein, den Wandaustritt luftdicht zu verschließen. Das Material von Dichtelement und/oder Fixierklappe ist daher typischerweise gasdicht. Im allgemeinen Fall ist jedoch die perfekte Luftdichtheit kein zwingendes Merkmal einer Luftdichtmanschette der vorliegenden Erfindung.

Die Fixierklappe trägt vorzugsweise auf ihrer dem Dichtelement zugewandten Seite eine Kleberschicht. Diese Kleberschicht ist optional vor der Montage der Luftdichtmanschette durch eine Abziehfolie abgedeckt und geschützt. Für die Montage kann dann die Abziehfolie entfernt und die Fixierklappe über den Trennschlitz geklebt werden. Auf diese Weise wird einerseits die Fixierklappe in ihrer Position befestigt und andererseits gleichzeitig die geschlossene Konfiguration des Dichtelementes fixiert.

Gemäß einer bevorzugten Ausführungsform der Erfindung ist sowohl auf der Vorderseite (Raumseite) als auch der Rückseite (Wandseite) des Dichtelementes jeweils eine Fixierklappe angeordnet. Der Trennschlitz kann dann von beiden Seiten mit jeweils einer Fixierklappe überdeckt werden, was eine besonders gute Sicherung und Dichtung ergibt.

Die Fixierklappe ist Teil einer das gesamte Dichtelement abdeckenden Materialschicht.

Das Dichtelement kann vorzugsweise auf seiner im montierten Zustand der Wand zugewandten Rückseite eine Kleberschicht aufweisen, damit es an die Wand angeklebt werden kann. Vorteilhafterweise ist diese Kleberschicht vor der Montage durch eine Abziehfolie geschützt.

Gemäß einer anderen Weiterbildung der Erfindung weist das Dichtelement einen Innenring auf, welcher ein nachgiebiges, weiches (elastisches und/oder plastisches) Material enthält. Durch seine Nachgiebigkeit kann dieses Material sich eng an ein Kabel andrücken und so für eine gute Dichtung sorgen.

Der genannte Innenring ist optional von einem Spannring umgeben, welcher einen radial einwärts gerichteten Druck auf den Innenring ausüben kann. Der Spannring kann zu diesem Zweck beispielsweise verhältnismäßig steif bzw. unelastisch gegen Zugbeanspruchung sein. Durch den einwärts gerichteten Druck sorgt er dafür, dass der Innenring fest an das Kabel angedrückt wird und so eine gute Dichtung erzielt.

Die Enden des genannten Spannringes sind vorzugsweise miteinander verbindbar, so dass ein bestimmter eingestellter Druck fixiert werden kann. Die Enden können beispielsweise durch Formschluss mit einer schwalbenschwanzartigen Verbindung koppelbar oder miteinander verklebbar sein.

Die Erfindung betrifft weiterhin einen Wandaustritt (mindestens) eines Kabels, Rohres oder dergleichen, welcher eine Luftdichtmanschette der oben erläuterten Art enthält.

Ferner betrifft die Erfindung ein Verfahren zum Abdichten des Wandaustritts (mindestens) eines Kabels, Rohres oder dergleichen, welches die folgenden Schritte umfasst:
- Das Umschließen des Kabels, Rohres oder dergleichen mit einem C-förmigen Dichtelement.
- Überdecken der Enden des Dichtelementes durch mindestens eine Fixierklappe.

Das Verfahren kann insbesondere unter Einsatz einer Luftdichtmanschette der oben beschriebenen Art ausgeführt werden. Die Fixierklappe kann vorzugsweise über die Enden des Dichtelementes geklebt werden.

Im Folgenden wird die Erfindung mit Hilfe der beigefügten Figuren beispielhaft näher erläutert. Dabei zeigt:

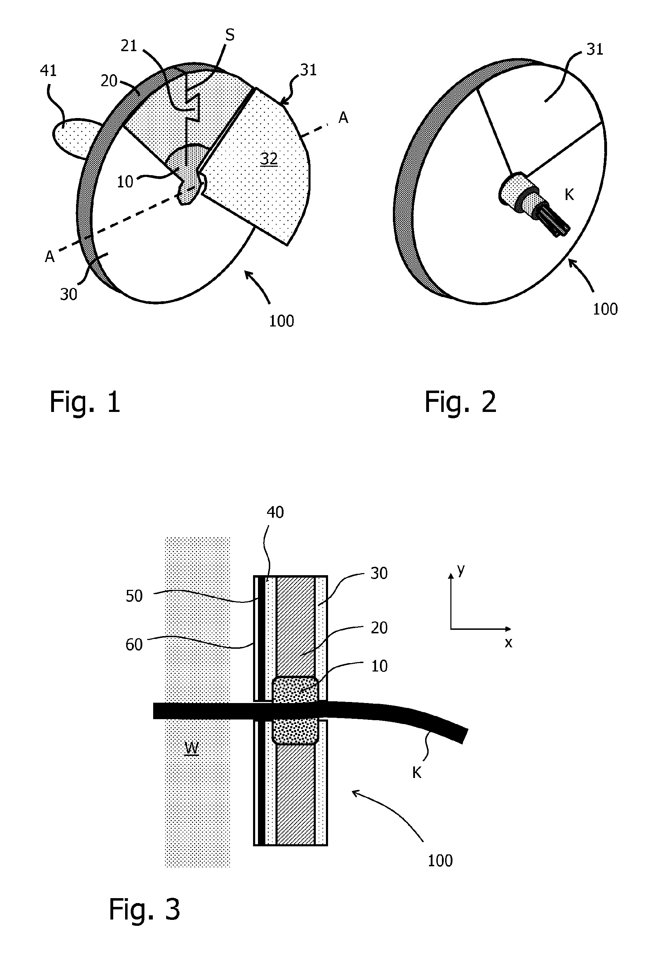

- Fig. 1: eine perspektivische Ansicht einer erfindungsgemäßen Luftdichtmanschette vor der Montage mit offenen Fixierklappen;
- Fig. 2: die Luftdichtmanschette von Figur 1 bei Anordnung um ein Kabel und mit geschlossenen Fixierklappen;
- Fig. 3: einen Schnitt entlang der Linie A-A von Figur 1.

Die in den Figuren dargestellte Luftdichtmanschette 100 dient dazu, den Austritt eines Kabels K aus einer Wand W luftdicht abzuschließen. Anstelle eines Kabels K könnten natürlich auch ein oder mehrere andere ähnliche Elemente abgedichtet werden, beispielsweise ein Rohr.

Die Luftdichtmanschette 100 enthält als eine grundlegende Komponente ein Dichtelement, das im dargestellten Ausführungsbeispiel aus einem Innenring 10 und einem diesen umgebenden Spannring 20 besteht. Das Dichtelement 10, 20 hat insgesamt die Form einer ringförmigen Scheibe, wobei vom Mittelpunkt dieser Scheibe zum Rand hin ein Trennschlitz S durch den Innenring 10 und den Spannring 20 verläuft. Im Spannring 20 hat dieser Trennschlitz S einen verspringenden Verlauf, so dass dort eine schwalbenschwanzförmige Verbindung 21 zwischen den beiden Enden des Spannringes 20 verwirklicht wird.

Der Innenring 10 besteht typischerweise aus einem elastischen, weichen Material wie beispielsweise einem Schaumstoff, welches sich durch Kompression eng an das Kabel K andrücken lässt und so für eine gute Dichtung sorgt. Der Spannring 20 ist dagegen steifer und kann daher einen radial einwärts gerichteten Druck auf den Innenring 10 ausüben, wenn seine Enden miteinander verbunden werden.

Die Luftdichtmanschette 100 weist weiterhin eine Fixierklappe 31 an der Vorderseite und eine Fixierklappe 41 an der wandseitigen Rückseite auf, welche vor der Montage beweglich entlang einer Schwenklinie mit dem Dichtelement verbunden sind (d. h. mit dem Innring 10 und dem Spannring 20). Im dargestellten Beispiel sind die Fixierklappen 31 und 41 Kreissektoren einer Außenschicht 30 bzw. 40, welche die Vorderseite bzw. Rückseite des Innenringes 10 und des Spannringes 20 abdeckt.

Die Fixierklappen 31, 41 weisen auf ihrer dem Dichtelement zugewandten Seite eine Kleberschicht auf, welche vor der Montage durch eine Abziehfolie 32 geschützt ist. Nachdem das Dichtelement um ein Kabel K herumgelegt wurde, kann die Abziehfolie 32 entfernt und die Fixierklappe 31 über dem Trennschlitz S auf das Dichtelement aufgeklebt werden. Auf diese Weise wird einerseits der Trennschlitz S abgedichtet und andererseits die Verbindung des Spannringes 20 fixiert. Ein weiterer Effekt besteht darin, dass der Innenring, welcher vorzugsweise etwas dicker (z. B. 2 mm) ausgelegt ist als der Spannring 20, zusätzlich komprimiert wird.

Als letzter Schritt der Montage muss nur noch eine weitere Abziehfolie 60 auf der wandseitigen Rückseite der Luftdichtmanschette abgezogen werden, um eine dort befindliche Kleberschicht 50 freizulegen. Mit dieser Kleberschicht kann die Luftdichtmanschette dann auf den jeweiligen Wand-Untergrund (z. B. Dampfsperre, Isolierfolie, Mauerwerk etc.) aufgeklebt werden.

Vorteilhaft an der beschriebenen Luftdichtmanschette ist unter anderem, dass sie von einer Person in einem Arbeitsschritt ohne Hilfswerkzeug montiert werden kann.

## Patentansprüche

1. Luftdichtmanschette (100) zum Abdichten des Wandaustritts eines Kabels (K) oder dergleichen, enthaltend:
- ein ringförmiges Dichtelement (10, 20) mit einem im Wesentlichen radial verlaufenden Trennschlitz (S);
- mindestens eine Fixierklappe (31, 41), welche beweglich am Dichtelement so angeordnet ist, dass sie im montierten Zustand den Trennschlitz zumindest teilweise überdecken kann,
**dadurch gekennzeichnet, dass** die Fixierklappe (31, 41) Teil einer das gesamte Dichtelement abdeckenden Materialschicht (30, 40) ist.

2. Luftdichtmanschette (100) nach Anspruch 1
**dadurch gekennzeichnet, dass** die Fixierklappe (31, 41) auf ihrer dem Dichtelement (10, 20) zugewandten Seite eine Kleberschicht aufweist.

3. Luftdichtmanschette (100) nach Anspruch 2,
**dadurch gekennzeichnet, dass** die Kleberschicht durch eine Abziehfolie (32) abgedeckt ist.

4. Luftdichtmanschette (100) nach mindestens einem der Ansprüche 1 bis 3,
**dadurch gekennzeichnet, dass** auf der Vorderseite und der Rückseite des Dichtelementes (10, 20) jeweils eine Fixierklappe (31, 41) angeordnet ist.

5. Luftdichtmanschette (100) nach mindestens einem der Ansprüche 1 bis 4,
**dadurch gekennzeichnet, dass** das Dichtelement (10, 20) wandseitig eine Kleberschicht (50) aufweist.

6. Luftdichtmanschette (100) nach mindestens einem der Ansprüche 1 bis 5,
**dadurch gekennzeichnet, dass** das Dichtelement (10, 20) einen Innenring (10) aus einem nachgiebigem Material aufweist.

7. Luftdichtmanschette (100) nach Anspruch 6,
**dadurch gekennzeichnet, dass** der Innenring (10) von einem Spannring (20) umgeben ist, welcher einen radial einwärts gerichteten Druck ausüben kann.

8. Luftdichtmanschette (100) nach Anspruch 7,
**dadurch gekennzeichnet, dass** die Enden (21) des Spannringes (20) miteinander verbindbar sind.

9. Wandaustritt eines Kabels (K) oder dergleichen,
**dadurch gekennzeichnet, dass** er eine Luftdichtmanschette (100) nach mindestens einem der Ansprüche 1-8 enthält.

10. Verfahren zum Abdichten des Wandaustritts eines Kabels (K), Rohres oder dergleichen, welches die folgenden Schritte umfasst:
- Das Umschließen des Kabels, Rohres oder dergleichen mit einem C-förmigen Dichtelement (10, 20);
- Überdecken der Enden des Dichtelementes durch mindestens eine Fixierklappe (31, 41), wobei die Fixierklappe (31, 41) Teil einer das gesamte Dichtelement abdeckenden Materialschicht (30, 40) ist.

## Claims

1. Airtight sleeve (100) for sealing the wall outlet of a cable (K) or the like, comprising:
- an annular sealing element (10, 20) having a substantially radially extending separating slot (S);
- at least one fixing flap (31, 41) which is arranged movably on the sealing element such that it can at least partially cover the separating slot in the mounted state,
**characterized in that** the fixing flap (31, 41) is part of a material layer (30, 40) covering the entire sealing element.

2. Airtight sleeve (100) according to Claim 1, **characterized in that** the fixing flap (31, 41) has an adhesive layer on its side facing the sealing element (10, 20).

3. Airtight sleeve (100) according to Claim 2, **characterized in that** the adhesive layer is covered by a peelable film (32).

4. Airtight sleeve (100) according to at least one of Claims 1 to 3, **characterized in that** in each case a fixing flap (31, 41) is arranged on the front side and the rear side of the sealing element (10, 20).

5. Airtight sleeve (100) according to at least one of Claims 1 to 4, **characterized in that** the sealing element (10, 20) has an adhesive layer (50) on the wall side.

6. Airtight sleeve (100) according to at least one of Claims 1 to 5, **characterized in that** the sealing element (10, 20) has an inner ring (10) made of a resilient material.

7. Airtight sleeve (100) according to Claim 6, **characterized in that** the inner ring (10) is surrounded by a clamping ring (20) which can exert a radially inwardly directed pressure.

8. Airtight sleeve (100) according to Claim 7, **characterized in that** the ends (21) of the clamping ring (20) can be connected to one another.

9. Wall outlet of a cable (K) or the like, **characterized in that** it comprises an airtight sleeve (100) according to at least one of Claims 1-8.

10. Method for sealing the wall outlet of a cable (K), pipe or the like, which comprises the following steps:
- enclosing the cable, pipe or the like with a C-shaped sealing element (10, 20);
- covering the ends of the sealing element with at least one fixing flap (31, 41), wherein the fixing flap (31, 41) is part of a material layer (30, 40) covering the entire sealing element.

## Revendications

1. Manchette étanche à l'air (100) pour l'étanchéité de la sortie de paroi d'un câble (K) ou similaire, contenant:
- un élément d'étanchéité annulaire (10, 20) avec une fente de séparation (S) s'étendant essentiellement radialement;
- au moins un volet de fixation (31, 41), qui est disposé de manière mobile au niveau de l'élément d'étanchéité de telle sorte qu'il puisse au moins partiellement recouvrir la fente de séparation dans l'état monté, **caractérisée en ce que** le volet de fixation (31, 41) fait partie d'une couche de matériau (30, 40) recouvrant l'ensemble de l'élément d'étanchéité.

2. Manchette étanche à l'air (100) selon la revendication 1, **caractérisée en ce que** le volet de fixation (31, 41) présente sur son côté tourné vers l'élément d'étanchéité (10, 20) une couche de colle.

3. Manchette étanche à l'air (100) selon la revendication 2, **caractérisée en ce que** la couche de colle est recouverte par un film arrachable (32).

4. Manchette étanche à l'air (100) selon au moins l'une quelconque des revendications 1 à 3, **caractérisée en ce que** du côté avant et du côté arrière de l'élément d'étanchéité (10, 20) est à chaque fois disposé un volet de fixation (31,41).

5. Manchette étanche à l'air (100) selon au moins l'une quelconque des revendications 1 à 4, **caractérisée en ce que** l'élément d'étanchéité (10, 20) présente du côté de la paroi une couche de colle (50).

6. Manchette étanche à l'air (100) selon au moins l'une quelconque des revendications 1 à 5, **caractérisée en ce que** l'élément d'étanchéité (10, 20) présente une bague interne (10) en un matériau flexible.

7. Manchette étanche à l'air (100) selon la revendication 6, **caractérisée en ce que** la bague interne (10) est entourée par une bague de serrage (20) qui peut exercer une pression orientée radialement vers l'intérieur.

8. Manchette étanche à l'air (100) selon la revendication 7, **caractérisée en ce que** les extrémités (21) de la bague de serrage (20) peuvent être connectées l'une à l'autre.

9. Sortie de paroi d'un câble (K) ou similaire, **caractérisée en ce qu'**elle contient une manchette étanche à l'air (100) selon au moins l'une quelconque des revendications 1 à 8.

10. Procédé pour étanchéifier la sortie de paroi d'un câble (K), d'un tube ou similaire, qui comprend les étapes suivantes:
- entourer le câble, tube ou similaire avec un élément d'étanchéité en forme de C (10, 20);
- recouvrir les extrémités de l'élément d'étanchéité par au moins un volet de fixation (31, 41), le volet de fixation (31, 41) faisant partie d'une couche de matériau (30, 40) recouvrant l'ensemble de l'élément d'étanchéité.
